# EUROPEAN PATENT SPECIFICATION

(11) **EP 4 526 606 B1**
(45) Date of publication and mention of the grant of the patent: **11.11.2026**
(21) Application number: 23729587.8
(22) Date of filing: 10.05.2023
(51) Int. Cl.: F24T 10/17

(54) **THERMAL REACH ENHANCEMENT FLOWBACK PREVENTION COMPOSITIONS AND METHODS**
ZUSAMMENSETZUNGEN UND VERFAHREN ZUR VERHINDERUNG DES RÜCKFLUSSES ZUR VERBESSERUNG DER THERMISCHEN REICHWEITE
COMPOSITIONS ET PROCÉDÉS DE PRÉVENTION DE REFLUX D'AMÉLIORATION DE PORTÉE THERMIQUE

(30) Priority: 17.05.2022 US 202263342861 P
(43) Date of publication of application: 26.03.2025
(73) Proprietor: XGS Energy, Inc., Palo Alto CA 94303 (US)
(72) Inventor: MONCARZ, Piotr D., Palo Alto, California 94306 (US); BOIS, Axel-Pierre, 69250 Curis-au-Mont-D'Or (FR); BOUR, Daniel, Granite Falls, Washington 98252 (US)
(74) Representative: Hutter, Anton
(86) International application number: PCT/US2023/021693
(87) International publication number: WO 2023/224847

(56) References cited:
- EP-A2- 1 065 451
- WO-A1-2011/034545
- WO-A1-2020/006620
- DE-B3- 102007 031 418
- US-A- 4 912 941
- US-A1- 2006 243 166
- US-A1- 2007 125 274
- US-A1- 2021 071 063

## Description

This application claims priority to, and the benefit of, co-pending US provisional application with the serial number 63/342,861 entitled "Thermal Reach Enhancement Flowback Prevention Compositions And Methods", which was filed 5/17/2022.

### Field

The field of the disclosure is compositions and methods for improved thermal reach enhancement (TRE) for closed loop geothermal system (CLGS) wells, especially as it relates to compositions and methods that reduce or prevent flowback of high thermal conductivity (thermal k) materials during and after placement of a high thermally conductive fluid system.

### Background of the Disclosure

The background description includes information that may be useful in understanding the present disclosure. It is not an admission that any of the information provided herein is prior art or relevant to the present disclosure, or that any publication specifically or implicitly referenced is prior art.

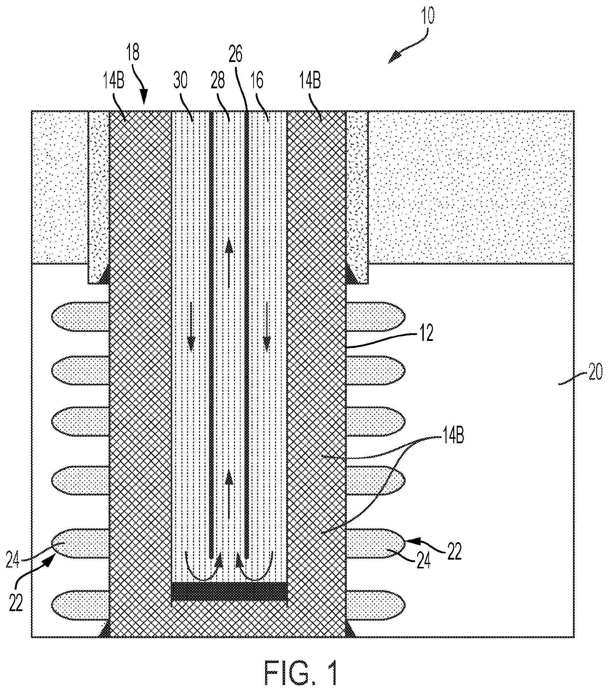

Closed loop geothermal systems (CLGS) are designed to extract thermal energy from the ground to generate electricity or to use the extracted energy for other purposes like providing heat for industrial purposes or residential heating. The basic concept is to drill a hole in the ground to a depth at which the formation has a desirably high temperature and to circulate a cooled working fluid (*e.g.*, water) within an annular space formed by a casing and the outside of insulated tubing downhole, and upon heating of the working fluid, back up to the surface (*e.g.,* as steam) through the insulated tubing as is exemplarily shown in **FIG.1****.** Typically, the working fluid is kept in liquid form by maintaining enough pressure on the system to prevent the working fluid (*i.e.,* water, etc.) from vaporizing. For instance, WO 2020/006620 A1 discloses examples where open hole drilled wellbores are sealed while drilling to form an impervious layer at the wellbore/formation interface. The techniques may be chemical, thermal, mechanical, biological and are fully intended to irreversibly damage the formation in terms of the permeability thereof.

### Summary of The Disclosure

The invention is as defined by the claims, and any other aspects, configurations, or embodiments set forth herein not falling within the scope of the claims are for information only, and not part of the invention. The disclosure is directed to various compositions and methods for thermal reach enhancement in geo heat recovery in which a TRE material comprises one or more distinct solid components that enable high thermal conductivity with minimal flowback during and after placement, even where the TRE is placed into a low permeability formation (*e.g*., intrusive igneous or metamorphous rock).

In one aspect of the disclosure, a thermal reach enhancement composition is contemplated that includes a blend of a first high thermal k particles and a second high thermal k particles, wherein the first and second high thermal k particles are chemically and physically distinct. In this context, it should be noted that the terms "thermal conductivity" and "thermal k" are used interchangeably herein. In such compositions, the first high thermal k particles are formed from a first material and have a shape such that a mass of the first high thermal k particles, upon compressional loading, deforms elastically and plastically, and the second high thermal k particles are formed from a second material and have a shape such that a mass of the second high thermal k particles, upon the compaction, deforms only elastically.

In some embodiments, the first high thermal k particles are shaped as flakes or platelets, and/or the first high thermal k particles are micro- or nanosized particles. In further embodiments, the first high thermal k particles are carbonaceous material particles. For example, suitable carbonaceous material includes single and/or multi-walled carbon nanotubes, graphene, a graphene oxide nanosheet, graphite powder, exfoliated graphite, flaked graphite, pyrolytic graphite, desulfurized petroleum coke, fly ash. Where desired, the carbonaceous material can also be a surface modified micro- or nanostructured carbon allotrope or surface modified coal.

In still further embodiments, the second high thermal k particles are irregularly shaped grains or particles and are typically dimensioned such that the aspect ratio of any two dimensions of a particle is equal or less than 10, and/or the second high thermal k particles are micro-and/or millimeter-sized particles. Where desired, the second high thermal k particles have a particle size distribution that spans at most 1 log unit, and/or the second high thermal k particles have a hardness of at least 7 on the Mohs scale. For example, the second high thermal k particles can be metal particles or metal oxide particles (*e.g.,* tin, aluminum, copper, iron, silver, gold, an aluminum copper alloy, or a silver aluminum alloy, silica, alumina, copper oxide, zinc oxide, aluminum oxide, hematite, magnetite, tin oxide, etc.). Alternatively, or additionally, the second high thermal k particles can also be barite, aluminum nitride, silicon nitride, and/or silicon carbide particles.

It is still further contemplated that the first high thermal k particles and the second high thermal k particles are present in the composition at a volume ratio of between 1:100 and 100:1 and/or that the composition can further include water in an amount sufficient to produce a pumpable/flowable slurry. As will be readily appreciated, the composition can include one or more of a dispersant, a plasticizer, a surfactant, an organic polymer, a NaCl or KCl or other inorganic salt.

Viewed from a different perspective, a thermal reach enhancement composition can include a blend of a first high thermal k particles and a second high thermal k particles, wherein the first and second high thermal k particles are physically distinct (and can have a different chemical composition), wherein the first high thermal k particles have a flake shape, and wherein the second high thermal k particles have an irregular (typically grain) shape. With respect to the materials and sizes of the first and second high thermal k particles, the same considerations as noted above apply. Moreover, the first high thermal k particles and the second high thermal k particles can be present in the composition at a volume ratio of between 1:100 and 100:1, and/or water can be added in an amount sufficient to produce a pumpable/flowable slurry. Where desired, the composition can also include one or more of a dispersant, a plasticizer, a surfactant, an organic polymer, NaCl or KCl or other inorganic salt.

Therefore, a thermal reach enhancement structure is contemplated that includes a network of compacted first high thermal k particles within a network of interlocked second high thermal k particles, wherein the first and second high thermal k particles are chemically and physically distinct, and wherein the networks of first and second high thermal k particles are disposed in a fissure within a formation and thermally coupled with a high thermal-k material and/or a conduit for a working fluid in a wellbore.

In most preferred aspects, the network of compacted first high thermal k particles and the network of interlocked second high thermal k particles is formed from the composition described above. Therefore, contemplated networks of first and second high thermal k particles can have a thermal conductivity that is at least twice the thermal conductivity of a rock formation in which the thermal reach enhancement structure is located. For example, the networks of first and second high thermal k particles can have a thermal conductivity of at least 50 W/m°K. Most typically, the fissures extend from the wellbore for at least eight times the radius of the wellbore. For example, the fissures can extend from the wellbore for up to 100 m. it is further contemplated that the high thermal-k material in the wellbore is a cementitious composition comprising a high thermal k material or a compacted slurry from high thermal k material. With respect to the formation, it is contemplated that the formation at the site of the fissures will have a temperature of at least 300 °C, and/or that the fissure is at a depth of at least 500 m. Moreover, it is contemplated that the conduit comprises an insulated return conduit and that the conduit is coupled to the high thermal-k material in the wellbore.

In still another aspect of the disclosure, a method of increasing thermal conductivity of a thermal reach enhancement structure is contemplated that includes a step of combining a plurality of first high thermal k particles with a plurality of second high thermal k particles. In a further step, the plurality of first and second high thermal k particles such that (a) the plurality of first high thermal k particles form a first mass that deforms elastically and plastically and (b) the plurality of second high thermal k particles form a second mass that deforms elastically. Upon compressional loading, the first mass is maintained in void spaces of a network of interlocked second high thermal k particles, and it is further contemplated that the first and second high thermal k particles are physically and/or chemically distinct. With respect to size, shape, and type of the particles, the same considerations as noted above apply.

Similarly, a method of generating a thermal reach enhancement structure in a formation is contemplated that includes a step of providing a slurry that comprises a plurality of first high thermal k particles and a plurality of second high thermal k particles, wherein the first and second high thermal k particles are chemically and physically distinct. In another step, a plurality of fissures is generated in the formation at an elevated pressure and the slurry is allowed at the elevated pressure to migrate into the fissures. In a further step, the elevated pressure is reduced in an amount sufficient to effect compaction of the first high thermal k particles and (preferably at a point at which a mass of the first high thermal k particles has plastically deformed) to effect interlocking of the second high thermal k particles. Therefore, after the step of reducing the elevated pressure, the compacted first high thermal k particles are located in a space that is formed and maintained by the interlocked second high thermal k particles. It can also be possible to achieve the goal of preventing fluid loss from the fissures with a single material with varying particle size distribution and possibly different shapes.

Most preferably, the slurry is prepared from a composition as presented herein, and/or the step of reducing the elevated pressure is performed over at least 1 or 2 hours. Therefore, in some embodiments, a thusly formed thermal reach enhancement structure can have a thermal conductivity that is at least twice the thermal conductivity of a rock formation in which the thermal reach enhancement structure is located. While not limiting the disclosure, it is contemplated that the formation is a low permeability formation. Additionally, it is contemplated that a conduit is thermally coupled to the fissures, and most typically, the thermally coupling comprises placing a high thermal k grout or slurry in contact with the compacted and interlocked particles.

Various objects, features, aspects, and advantages of the disclosure will become more apparent from the following detailed description of preferred embodiments, along with the accompanying drawing figures in which like numerals represent like components.

### Brief Description of The Drawing

**FIG.1** is a schematic illustration of an exemplary wellbore with TREs as presented herein and in which the TREs are thermally coupled to a working fluid conduit via a high thermal k cementitious material or high thermal k filler.
**FIG.2** is an exemplary stress/strain graph depicting results for compression of a high thermal k carbonaceous material.
**FIG.3** is an exemplary graph depicting thermal conductivity of a composition as a function of solids content.

### Detailed Description

Thermal recovery of a closed loop geothermal system can be increased by placement of additional bore holes into the formation and by filling such bore holes with thermally conductive material. For example, US 8,616,000 describes such system where multiple additional holes branch off a main bore hole. As will be readily appreciated, the process of placing such additional bore holes tends to complicate the process, adds risk of bore hole collapse, and where thermally conductive material is placed into the additional bore holes, residual water content in the thermally conductive material will often substantially diminish the thermal conductivity and effectiveness of such approach. In another approach, as described in US 11,220,882, an existing hydrocarbon production well is recompleted by replacing reservoir fluid with an isolation material that thermally couples the isolation material with an adjacent reservoir from which heat can then be extracted. However, efficient thermal transfer for energy production is unlikely in such configurations.

In further methods of increasing thermal efficiency, TRE (thermal reach enhancement) fissures can be placed along the length of a wellbore in such a manner that they conduct heat from the surrounding formation to the CLGS wellbore. The TREs are typically configured as fissures that are filled with high thermal k solid particulate materials. Creation of the TREs can be achieved by using techniques used in the oil and gas industry to enhance hydrocarbon production, typically by opening fissures in the rock formation using hydraulic pressure, or by taking advantage of already existing fissures. For example, fractures can be filled with iron infused cement or a sealant with thermally conductive particles as disclosed in WO 2022/018674. Unfortunately, and especially at high-temperature locations, such thermally conductive materials will be difficult to deploy and will in most cases have a relatively low thermal conductivity. In a further example, as described in US 2021/0396430, fracking is performed in a wellbore using a fracking fluid that includes proppant particles with thermal conductivity contrast of at least 5. While conceptually attractive, various difficulties may arise with such operation. Among other problems, any residual liquid content in the fracking fluid will reduce thermal conductivity in the fractured formation.

While placement of TREs seems conceptually relatively simple, numerous difficulties nevertheless remain. Most significantly, flowback of the TRE slurry from the fissures upon pressure reduction back into the bore hole presents a significant challenge. Optimum TRE performance requires placement of high thermal k material in the TRE fissures and maintaining maximum width of the TRE, especially near the wellbore where the TRE and wellbore thermally connect. As will be readily appreciated, if flowback of high thermal k material occurs after placement, the effectiveness of the TRE will either be entirely lost or greatly reduced. Unfortunately, the risk of flowback is particularly high in formations of low permeability rock.

Thus, even though various compositions and methods of placing TREs in CLGS are known in the art, all or almost all of them suffer from several drawbacks as currently known compositions and methods fail to prevent flowback of the high thermal k materials after placement, particularly where they are placed in low permeability rock. Therefore, there remains a need for improved TRE compositions and methods that retain the high thermal k materials after placement in the fissures after placement.

Various compositions and methods are disclosed that can be used with TREs having significantly improved properties that allow deployment and formation of TREs with high thermal conductivity without encountering flowback or extrusion into the wellbore after placement, even where the fissures are in a low permeability formation. To that end, it is contemplated that a blend of one, two, or more structurally (and in many cases also chemically) distinct high thermal k particles will advantageously generate a dimensionally stable and thermally highly conductive hybrid network.

Most typically, the first high thermal k particles are formed from a first material and have a shape such that a mass of the first high thermal k particles, upon compressional loading, deforms elastically and plastically, while the second high thermal k particles are formed from a second material and have a shape such that a mass of the second high thermal k particles, upon the compaction, deforms only elastically. Consequently, it should be appreciated that upon compressional loading of the blend by geostatic stress, the mass of first high thermal k particles conforms to the geometry of a fissure to so form a thermally conductive network that is then held in place by a network of second high thermal k particles that interlock upon further compaction. Viewed from a different perspective, it should be appreciated that flowback or expulsion of a TRE composition can be prevented using frictional forces among the second high thermal k particles that engage with each other and the fissure walls, while deformability of the first high thermal k materials will reduce porosity within the void spaces between the second high thermal k particles by deformation and compression of the first high thermal k materials to so form a compressed and dimensionally stabilized hybrid network. In at least some embodiments, compressional loading will be the stress that occurs during closing of a fissure (e.g., generated by hydraulic fracturing and subsequent reduction of hydraulic pressure) and can therefore represented by the geostatic stress at the fissure (during and upon closure).

In this context it should be particularly recognized that attempts to solve problems associated with flow back and expulsion with single types of materials will lead in all or almost all cases to less than satisfactory results and/or have a high risk of failure. More specifically, using a single and more deformable (softer) material, the risk of flowback is very high as such materials fail to internally engage among individual particles and also fail to engage externally with the fissure walls. On the other hand, using a single and significantly less deformable (harder) material, such materials will internally engage among individual particles and will also engage externally with the fissure walls, leading to rapid formation of void spaces that retain the carrier fluid (typically water), which in turn significantly reduce thermal conductivity. Such is particularly true where the harder material has a relatively narrow particle size distribution.

In contrast, it should now be appreciated that by combining both a softer, malleable particulate material (*e.g.,* graphite) and a harder particulate material (*e.g.,* silicon carbide) in appropriate ratios and particle size distributions, a TRE can be created and filled with a high-thermal-k filled particle hybrid pack that will not be prone to flowback after placement, even in low permeability rock. After placement, the TRE particle pack is stable, extrusion resistant, and has low porosity. In this context, it should be appreciated that optimizing particle size distribution of a single brittle TRE particulate composition may improve thermal conductivity, but not to the extent of the hybrid compositions presented herein.

Therefore, and more in general, a method of creating a stable TRE is contemplated that is adjacent to a wellbore penetrating a high-temperature rock formation. For example, such method can include a step of formulating a TRE particulate mixture of one or more high thermal conductivity materials with particle size distributions and/or shapes designed to allow close packing to create a low porosity, packed bed with at least one component having sufficient mechanical strength and coefficient of static friction to resist flow once the TRE slurry is in place and to hold the fissure open after pressure bleed-off, thereby leaving a stationary, dimensionally stable particulate bed. As will be readily appreciated, such mixture will be formulated as a slurry with a carrier fluid, and most typically such slurries will form a pumpable fluid (TRE slurry).

The pumpable slurry is then injected into a well adjacent to the high-temperature rock formation, and excess hydraulic pressure sufficient to create a fissure in the rock formation is applied. Most typically, pumping of the TRE slurry is continued to extend the fissure volume and to fill the fissure volume with the TRE slurry. In a further step, the TRE slurry is allowed to lose carrier fluid, either through leak off to the formation and/or slurry settling and slow, controlled bleed-off of separated carrier fluid leading to reduced pressure in the fissure and causing the fissure to close and compress the TRE particle bed locking it in place. As will be readily appreciated, the rate of controlled fluid bleed-off must be sufficiently slow to allow flow back of separated carrier fluid without creating enough pressure differential in the fissure to cause TRE particles to flow. The loss of carrier fluid over time and resulting closure of the fissure around the TRE bed leaves a compacted hybrid TRE solids bed with low porosity and bridging and support network to maintain dimensional stability, and resistance to particle movement.

**FIG.1** schematically depicts an exemplary geothermal well 10 within formation 20 and includes a wellbore 12 that comprises a thermally conductive material 14A and 14B (typically grout or settled particles) located in an annular space 18 formed between the wellbore 12 and casing 16. For example, the thermally conductive material can be or comprise a cementitious material that will typically include one or more thermally conductive materials such as graphite powder, flaked graphite, pyrolytic graphite, desulfurized petroleum coke, graphene, fly ash, copper powder, aluminum nitride, silicon carbide, and combinations thereof. The casing 16 is most typically part of a structure that forms a continuous circuit for a circulating working fluid therein and can therefore have a tube-in-tube configuration of a CLGS. However, other configurations, which may or may not include heat exchangers and/or heat exchange fins, are also deemed suitable for use herein. The geothermal well 10 will be formed within formation 20. In various embodiments, formation 20 includes a plurality of fissures 22 that are at least partially filled (and preferably substantially completely) with a blend 24 of first high thermal k particles and second high thermal k particles. During operation of the CLGS, a mass of the second high thermal k particles is interlocked without significant deformation of the mass of the second high thermal k particles while void spaces in the interlocked mass is filled with a mass of compressed first high thermal k particles. As will be readily appreciated, the high-thermal k blend 24 in the fissures 22 is in thermal exchange (and can in some instances even chemically bond) with the thermally conductive material 14A/14B in the wellbore 12.

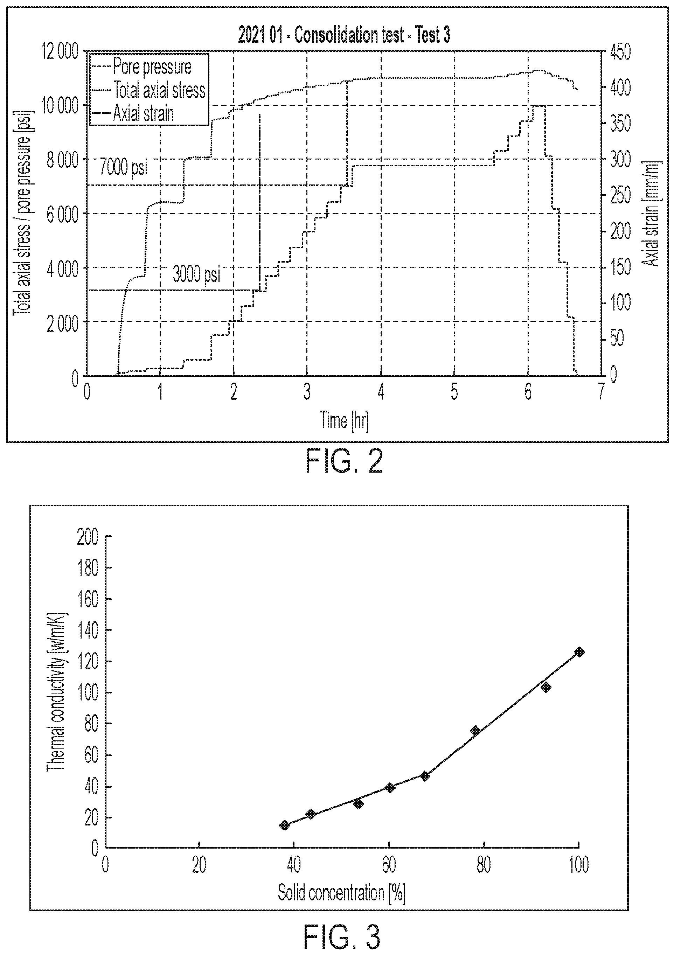

Therefore, it should be appreciated that in some embodiments, contemplated thermal reach enhancement compositions will comprise at least two types of particles, the first type having the shape of flakes and being easily deformable to favor compaction as is exemplarily shown in the graph of **FIG.2****,** and the second type having a more regular shape and being strong and abrasive to provide friction. Thus, and viewed from a different perspective, contemplated thermal reach enhancement compositions will include at least a first component that provides friction and dimensional stability and at least a second component that allows for compaction, wherein first and second components will preferably have high thermal conductivity. In this context it should be noted that to achieve a high thermal k of the TRE, the TRE slurry must be sufficiently dewatered, but sufficient water must also be used to make a pumpable slurry of high thermal k material that can be injected into the TRE as it is created. The dewatering results in a significant increase in the thermal k of TRE material(s) pack as seen in **FIG.3****.** Dewatering maximizes the solids concentration of the high thermal k material and the resultant thermal k of the filler in the TRE. Therefore, it should be appreciated that the interlocking and compression of the composition not only enables tight packing of the components while retaining the mixture in place but also allows for removal of water from the slurry to so maximize thermal conductivity. The so optimized thermal conductivity will generate significant economic benefits due to increased thermal efficiency of the system, which translates to greater economic value of the GSL system on a per well basis.

In one exemplary embodiment, a thermal reach enhancement composition comprises a blend of graphite flakes as first high thermal k particles and silicon carbide as second high thermal k particles. Most preferably, but not necessarily, the graphite flakes have a relatively small size, typically between 500 nm and 500 µm in the largest dimension and between 50 nm and 50 µm in the smallest dimension with a relatively large particle size distribution. The silicon carbide is preferably shaped as substantially spherical particles with an average diameter of between about 200 µm to about 2 mm, and it is still further preferred that the particles have a relatively uniform particle size distribution that spans at most 1 log unit. The weight ratio between the first high thermal k particles and the second high thermal k particles is typically about 3: 1.

As will be readily appreciated the first high thermal k particles in the composition will have a flake shape whereas the second high thermal k particles have a (most typically irregular) grain shape. For example, the second high thermal k particles will be shaped such that an aspect ratio of any two dimensions of a particle is equal or less than 10, or less than 7, or less than 5. Viewed from a different perspective, a mass of the first high thermal k particles will be elastically and plastically deformable upon compression without significant interlocking of the first particles due to low friction, while a mass of the second high thermal k particles will typically not plastically deform but interlock upon compression without significant deformation (*e.g.,* less than 10% change in volume, or less than 5% change in volume, or less than 2% change in volume) of the mass of the second high thermal k particles due to high friction.

With respect to the thermal conductivity of the first and second high thermal k particles it is generally contemplated that the k value for the first and/or second high thermal k particles is at least 2 W/m°K, or at least 4 W/m°K, or at least 6 W/m°K, or at least 8 W/m°K, or at least 10 W/m°K, or at least 20 W/m°K, or at least 50 W/m°K, or at least 100 W/m°K, or at least 200 W/m°K, and even higher. Most typically, the k-value for the first and second high thermal k particles will be at least somewhat distinct, with first and second k-values having an n-fold difference, with n being between 1.5 and 3.0, or between 3.0 and 5.0. In preferred aspects, the k-value of the first high thermal k particles will be larger than the k-value of the second high thermal k particles, or the k-value of the predominant (by weight) high thermal k particles will be larger than the k-value of the minority (by weight) high thermal k particles. However, in at least some aspects, the k-value of the second high thermal k particles will be larger than the k-value of the first high thermal k particles, or the k-value of the minority (by weight) high thermal k particles will be larger than the k-value of the predominant (by weight) high thermal k particles.

It should further be appreciated that the first high thermal k particles need not be limited to graphite platelets having a size within the nanometer or micrometer domain and a platelet or flake shape, but that numerous materials, shapes, and sizes are also deemed suitable so long as such materials, sizes, and shapes have a low kinetic friction and/or compact or deform under compressive forces. For example, and among other suitable choices, contemplated alternative first high thermal k particles are carbonaceous material particles such as single and/or multi-walled carbon nanotube, graphene, a graphene oxide nanosheet, graphite powder, exfoliated graphite, flaked graphite, pyrolytic graphite, desulfurized petroleum coke, and/or fly ash. It is still further contemplated that these particles can be further chemically modified to enhance one or more parameters such as homogenous mixability, bonding to the formation, cementitious materials, metals, and/or metal oxides, and typical modifications include addition of polar groups such as carboxylate groups, hydroxyl groups, keto groups, nitro groups, sulfate groups, epoxy groups, etc. For example, such modified compounds can include micro- or nanostructured carbon allotropes and/or surface modified coal.

Suitable sizes for the first high thermal k particles include sizes with a largest dimension of between about 10-50 nm, or between 50-250 nm, or between 250-1,000 nm, or between 1-20 µm, or between 20-200 µm, or between 200-750 µm, or between 750-2,000 µm, and even larger. Moreover, the first high thermal k particles will preferably have a relatively wide particle size distribution. Therefore, contemplated first high thermal k particles can have a particle size distribution that spans at least 2.0 log units, or at least 2.5 log units, and even wider.

Likewise, the second high thermal k particles need not be limited to silicon carbide having a size within the micrometer or millimeter domain and spherical shape, but that numerous materials, shapes, and sizes are also deemed suitable so long as such materials, sizes, and shapes have a high kinetic friction and/or interlock without substantial deformation under compressive forces. For example, suitable second high thermal k particles include metal particles or metal oxide particles, such as particles from tin, aluminum, copper, iron, silver, gold, an aluminum copper alloy, or a silver aluminum alloy, and/or particles from silica, alumina, beryllia, copper oxide, zinc oxide, aluminum oxide, hematite, magnetite, and/or tin oxide. In further contemplated aspects, suitable particles also include particles from barite, boron arsenite, aluminum nitride, and/or silicon nitride.

Suitable sizes for the second high thermal k particles include sizes with a largest dimension of between about 10-50 µm, or between 50-200 µm, or between 200-1,000 µm, or between 1-5 mm, or between 2-10 mm, and even larger. In addition, the second high thermal k particles will preferably have a narrower particle size distribution than the first high thermal k particles. Therefore, contemplated second high thermal k particles can have a particle size distribution that spans at most 1 log unit, or at most 1.5 log units, or at most 2 log units.

In still further contemplated aspects, the second high thermal k particles have a hardness that is significantly higher than the hardness of the first high thermal k particles, and the hardness difference is at least 1.0, or at least 2.0, or at least 2.5, or at least 3.0 units as measured on the Mohs scale (with respect to corresponding bulk material from which the second high thermal k particles are formed). Viewed from a different perspective, the second high thermal k particles will have a hardness of at least 7 on the Mohs scale. Throughout this disclosure, where a hardness of particles is referred to it should be understood that the hardness may be measured on the Mohs scale using a measurement of the hardness of the corresponding bulk material from which the particles are formed.

With respect to the volume ratio of the first high thermal k particles and the second high thermal k particles it is contemplated that the volume ratio may vary considerably, and the type and size of first and second particles and/or the shape of the thermal reach enhancement structure will at least in part determine volume ratio. However, it is generally contemplated that the first high thermal k particles and the second high thermal k particles are present in the composition at a volume ratio of between 1:100 and 100:1. For example, contemplated compositions can include between 1 and 30 vol% of the second high thermal k particles, or less than 25 vol%, or less than 20 vol%, or less than 15 vol%, or less than 10 vol%, or less than 5 vol%, but typically more than 1 vol% or more than 2 vol%, or more than 3 vol%.

To use such compositions as TRE materials, it is contemplated that water and/or any other fluid can be employed to thereby generate a slurry, and most preferably a pumpable slurry. In this context, it should be recognized that due to the hybrid composition of materials with distinct frictional behavior, so produced TRE slurries will be easier to mix and pump than slurries with only a single material and relatively narrow particle size distribution.

Such slurries can then advantageously be used for formation of one or more TREs in a location in a formation that has an elevated temperature, typically of at least 200 °C, or at least 250 °C, at least 300 °C, at least 350 °C, at least 400 °C, or at least 450 °C, and a depth of at least 500 m, or at least 1,000 m, or at least 1,500 m, or at least 2,000 m, or even deeper as generally described above. Therefore, once deployed and a TRE is formed, a thermal reach enhancement structure is contemplated that includes a network of compacted first high thermal k particles within a network of interlocked second high thermal k particles, wherein the first and second high thermal k particles are physically and/or chemically distinct, and wherein the networks of first and second high thermal k particles are disposed in a fissure within a formation and are thermally coupled with a high thermal-k material and/or a conduit for a working fluid in a wellbore.

Advantageously, the networks of first and second high thermal k particles will have a thermal conductivity that is at least twice, or at least three times, or at least five time, or at least 10 time, or at least 20 times the thermal conductivity of a rock formation in which the thermal reach enhancement structure is located. For example, thermal conductivity of a rock formation can be in most typical examples between 0.5 and 5 W/m°K, and in some examples between 5 and 7 W/m°K, and is other examples between 7-10 W/m°K. Therefore, contemplated networks of first and second high thermal k particles can have a thermal conductivity of at least 4 W/m°K, or at least 6 W/m°K, at least 8 W/m°K, at least 10 W/m°K, at least 15 W/m°K, at least 20 W/m°K, at least 30 W/m°K, at least 40 W/m°K, at least 50 W/m°K, at least 60 W/m°K, at least 70 W/m°K, and even higher. For example, contemplated networks of first and second high thermal k particles can have a thermal conductivity of between 5 and 20 W/m°K, or between 10 and 30 W/m°K, between 25 and 50 W/m°K, between 40 and 75 W/m°K, etc. Such conductivity can be determined, for example, from thermal conductivity of the network of first and second high thermal k particles that are water saturated and compacted under 2000 psi (13789514.586 pascal) uniaxial-strain effective stress.

Moreover, it is contemplated that the fissures (containing the TRE materials) extend from the wellbore for multiples of the wellbore radius, such as at least two times the radius of the wellbore, at least four times the radius of the wellbore, at least six times the radius of the wellbore, at least eight times the radius of the wellbore, at least ten times the radius of the wellbore, at least 20 times the radius of the wellbore, at least 50 times the radius of the wellbore, and even longer. Therefore, the fissures can extend from the wellbore for up to 5 m, or up to 10 m, or up to 25 m, or up to 50 m, or up to 100 m, and in some cases even more. The length of such fissures can be determined, for example, from the width at the mouth of the fissure and the volume of TRE compositions pumped into the fissure. As will be readily recognized, such wellbores with TRE structures are particularly desirable for geo heat recovery and power generation in a dry and hot formation where a conduit delivers a working fluid (e.g., water) to the TRE region and wherein an internal (preferably insulated) return conduit is used to withdraw heated working fluid. Most typically, the conduit will be in a wellbore in which a cementitious composition comprising a high thermal k material or a compacted slurry from high thermal k material forms a thermal bridge between the TRE and the conduit.

In view of the above, a method of increasing thermal conductivity of a thermal reach enhancement structure is contemplated that includes a step of combining a plurality of first high thermal k particles with a plurality of second high thermal k particles, wherein, upon compression of the plurality of first and second high thermal k particles, the plurality of first high thermal k particles undergo compaction in a space that is formed and maintained by interlocking of the plurality of second high thermal k particles, and wherein the first and second high thermal k particles are physically and/or chemically distinct.

Consequently, a method of generating a thermal reach enhancement structure in a formation is also contemplated that includes a step of providing a slurry that comprises a plurality of first high thermal k particles and a plurality of second high thermal k particles, wherein the first and second high thermal k particles are physically and/or chemically distinct and the slurry suspension properties allow particle settling in the static slurry, and a further step of generating a plurality of fissures in the formation at an elevated pressure and allowing, at the elevated pressure, the slurry to migrate into the into the fissures and particle settling/compaction in the static slurry. In yet a further step, the elevated pressure is reduced by extraction of water or other fluid separated from the slurry in an amount sufficient to induce closure of the fissure trapping the particulates and further extruding carrier fluid to effect compaction of the first high thermal k particles and to effect interlocking of the second high thermal k particles such that the first high thermal k particles are compacted in a space that is formed and maintained by the interlocked second high thermal k particles. It should further be noted that while the examples refer to water as the fluid for preparation of the slurry, numerous other fluids are also expressly contemplated herein and include aqueous solutions comprising an organic solvent component, organic solvents, and air or at least partially purified gases (CO₂, N₂, etc.)

Of course, it should be recognized that the pressure reduction and time for such pressure reduction will depend on the type of formation, size, number, and extend of the fissures, etc. Therefore, pressure reduction can be performed over 1 hour, or 2 hours or less, or at least 4 hours, or at least 6 hours, or at least 12 hours, or at least 24 hours, and longer. However, in some embodiments, the time for reduction in pressure may also be between 1 and 10 minutes, or between 10-30 minutes, or between 20 and 45 minutes. Viewed from a different perspective, the step of reducing the elevated pressure can be performed over a time sufficient to remove at least 50%, or at least 60%, or at least 70%, or at least 80%, or at least 85%, or at least 90% of water or other fluid from the slurry present before compaction and interlocking. While not limiting the disclosure, it is contemplated that the formation is a low permeability formation. To complete a heat recovery system in the formation, it is contemplated to thermally couple a conduit for transfer of a working fluid to the fissures. As noted above, such thermal coupling will typically be achieved by placing a high thermal k grout or slurry in contact with the compacted and interlocked particles.

In some aspects, the numbers expressing quantities of ingredients, properties such as concentration, reaction conditions, and so forth, used to describe and claim certain aspects of the disclosure are to be understood as being modified in some instances by the term "about." Accordingly, in some aspects, the numerical parameters set forth in the written description and attached claims are approximations that can vary depending upon the desired properties sought to be obtained by a particular aspect. The recitation of ranges of values herein is merely intended to serve as a shorthand method of referring individually to each separate value falling within the range. Unless otherwise indicated herein, each individual value is incorporated into the specification as if it were individually recited herein.

All methods described herein can be performed in any suitable order unless otherwise indicated herein or otherwise clearly contradicted by context. The use of any and all examples, or exemplary language (*e.g.,* "such as") provided with respect to certain aspects herein is intended merely to better illuminate the disclosure and does not pose a limitation on the scope of the claims. No language in the specification should be construed as indicating any non-claimed element is essential.

Any lexicographical definition in the publications, patents, and patent applications cited, including any lexicographical definition in any patent or patent application in the priority claim, that is not also expressly repeated in the instant specification should not be treated as such and should not be read as defining any terms appearing in the accompanying claims. The publications, patents, and patent applications discussed herein are provided solely for their disclosure prior to the filing date of the present application. Nothing herein is to be construed as an admission that the present disclosure is not entitled to antedate such publication by virtue of prior disclosure. Further, the dates of publication provided herein can be different from the actual publication dates, which can require independent confirmation.

The term "high thermal k particle," as used herein, refers to particles formed from a solid high thermal k material having an intrinsic (bulk) thermal conductivity that is at least twice the thermal conductivity of a rock formation into which the particles are placed, with the rock formation having a thermal conductivity that is in most cases greater than 1 W/mK and less than 10 W/mK. As such, the high thermal k particles can be formed from a high thermal k material having a thermal conductivity of at least 10 W/mK, or of at least 20 W/mK, or of at least 50 W/mK, or of at least 100 W/mK, or of at least 150 W/mK. For example, in some aspects the high thermal k particles can be formed from a high thermal k material having a thermal conductivity of between about 10-50 W/mK, or between about 30-90 W/mK, or between about 50-150 W/mK, or between about 100-300 W/mK, or between about 300-600 W/mK, and in some cases even higher.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise. As also used herein, and unless the context dictates otherwise, the term "coupled to" is intended to include both direct coupling (in which two elements that are coupled to each other contact each other), and indirect coupling (in which at least one additional element is located between the two elements). Therefore, the terms "coupled to" and "coupled with" are used synonymously.

It should be apparent to those skilled in the art that many more modifications besides those already described are possible without departing from the disclosure. The disclosure, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps can be present, or utilized, or combined with other elements, components, or steps that are not expressly referenced. Where the specification or claims refer to at least one of something selected from the group consisting of A, B, C .... and N, the text should be interpreted as requiring only one element from the group, not A plus N, or B plus N, etc.

## Claims

1. A thermal reach enhancement composition, comprising:
a blend of first high thermal k particles and second high thermal k particles, wherein the first and second high thermal k particles are physically and/or chemically distinct;
wherein the first high thermal k particles are formed from a first material and have a shape such that a mass of the first high thermal k particles, upon compressional loading, deforms elastically and plastically; and
wherein the second high thermal k particles are formed from a second material and have a shape such that a mass of the second high thermal k particles, upon the compressional loading, deforms only elastically.

2. The composition of claim 1, wherein:
(i) the first high thermal k particles are shaped as flakes or platelets,
(ii) the first high thermal k particles are micro- or nanosized particles, and/or
(iii) the first high thermal k particles are carbonaceous material particles, optionally wherein the carbonaceous material is selected from the group consisting of a single and/or multi-walled carbon nanotube, graphene, a graphene oxide nanosheet, graphite powder, exfoliated graphite, flaked graphite, pyrolytic graphite, desulfurized petroleum coke, and fly ash, more optionally wherein the carbonaceous material is a surface modified micro- or nanostructured carbon allotrope or surface modified coal.

3. The composition of either claim 1 or claim 2, wherein:
(i) the second high thermal k particles are shaped such that an aspect ratio of any two dimensions of a particle is equal or less than 10,
(ii) the second high thermal k particles are micro-and/or millimeter-sized particles,
(iii) the second high thermal k particles have a particle size distribution that spans at most 1 log unit,
(iv) the second high thermal k particles have a hardness of at least 7 on the Mohs scale, and/or
(v) the second high thermal k particles are metal particles or metal oxide particles, optionally wherein the metal in the metal particles is selected from the group consisting of tin, aluminum, copper, iron, silver, gold, an aluminum copper alloy, or a silver aluminum alloy, more optionally wherein the metal oxide particles are selected from the group consisting of silica, alumina, beryllia, copper oxide, zinc oxide, aluminum oxide, hematite, magnetite, and tin oxide, more optionally wherein the second high thermal k particles are barite, boron arsenite, aluminum nitride, silicon nitride, and/or silicon carbide particles.

4. The composition of any preceding claim, wherein the first high thermal k particles and the second high thermal k particles are present in the composition at a volume ratio of between 1:100 and 100:1.

5. The composition of any preceding claim, further comprising water in an amount sufficient to produce a pumpable slurry, optionally further comprising further comprising one or more of a dispersant, a plasticizer, a surfactant, an organic polymer, a silica filler, NaCl or KCl or other inorganic salt, optionally:
(i) wherein the blend of the high thermal k particles is present in the slurry in a volume ratio ranging from 25 vol% solids to 80 vol% solids, and/or
(ii) wherein the first high thermal k particles are carbonaceous material particles, and wherein the second high thermal k particles are barite, boron arsenite, aluminum nitride, silicon nitride, and/or silicon carbide particles.

6. The composition of claim 1:
wherein the first and second high thermal k particles are physically distinct;
wherein the first high thermal k particles have a flake shape; and
wherein the second high thermal k particles have an irregular grain shape; and
wherein, upon compressional loading of the blend by geostatic stress, a mass of first high thermal k particles deforms elastically and plastically and conforms to the geometry of a fissure to form a thermally conductive network that is then held in place by a network of second high thermal k particles that deforms elastically and interlocks upon further compaction.

7. The composition of claim 6, wherein:
(i) the first high thermal k particles are micro- or nanosized particles, and/or
(ii) the first high thermal k particles are carbonaceous material particles, optionally wherein the carbonaceous material is a single and/or multi-walled carbon nanotube, graphene, a graphene oxide nanosheet, graphite powder, exfoliated graphite, flaked graphite, pyrolytic graphite, desulfurized petroleum coke, fly ash, more optionally wherein the carbonaceous material is a surface modified micro- or nanostructured carbon allotrope or surface modified coal.

8. The composition of either claim 6 or claim 7, wherein:
(i) the second high thermal k particles are micro-and/or millimeter-sized particles,
(ii) the second high thermal k particles have a particle size distribution that spans at most 1 log unit.
(iii) the second high thermal k particles have a hardness of at least 7 on the Mohs scale,
(iv) the second high thermal k particles are metal particles or metal oxide particles, optionally wherein the metal in the metal particles is selected from the group consisting of tin, aluminum, copper, iron, silver, gold, an aluminum copper alloy, or a silver aluminum alloy, more optionally wherein the metal oxide particles are selected from the group consisting of silica, alumina, copper oxide, zinc oxide, aluminum oxide, hematite, magnetite, and tin oxide, more optionally wherein the second high thermal k particles are barite, aluminum nitride, silicon nitride, and/or silicon carbide particles.

9. The composition of any preceding claim:
(i) wherein the first high thermal k particles and the second high thermal k particles are present in the composition at a volume ratio of between 1:100 and 100:1, and/or
(ii) further comprising water in an amount sufficient to produce a pumpable slurry, optionally:
(a) further comprising at least one of a dispersant, a plasticizer, a surfactant, an organic polymer, a silica filler, a NaCl or KCl or other inorganic salt,
(b) wherein the blend of high thermal k particles is present in the slurry in a volume ratio ranging from 25 vol% solids to 80 vol% solids, and/or
(c) wherein the first high thermal k particles are carbonaceous material particles, and wherein the second high thermal k particles are barite, boron arsenite, aluminum nitride, silicon nitride, and/or silicon carbide particles.

10. A thermal reach enhancement structure, comprising:
a network of compacted first high thermal k particles within a network of compacted and interlocked second high thermal k particles;
wherein the first and second high thermal k particles are physically and/or chemically distinct;
wherein the first high thermal k particles are formed from a first material and have a shape such that a mass of the first high thermal k particles, upon compressional loading, deforms elastically and plastically; and
wherein the second high thermal k particles are formed from a second material and have a shape such that a mass of the second high thermal k particles, upon the compressional loading, deforms only elastically; and
wherein the networks of first and second high thermal k particles are disposed in a fissure within a formation and thermally coupled with a high thermal-k material and/or a conduit for a working fluid in a wellbore.

11. The thermal reach enhancement structure of claim 10, wherein the network of compacted first high thermal k particles and the network of compacted and interlocked second high thermal k particles is formed from the composition of any one of claims 1-5 or claims 6-9.

12. The thermal reach enhancement structure of either claim 10 or claim 11, wherein:
(i) the networks of first and second high thermal k particles have a thermal conductivity that is at least twice the thermal conductivity of a rock formation in which the thermal reach enhancement structure is located, optionally wherein the networks of first and second high thermal k particles have a thermal conductivity of at least 50 W/m°K, and/or
(iii) the high thermal-k material in the wellbore is a cementitious composition comprising a high thermal k material or a compacted slurry from high thermal k material.

13. The thermal reach enhancement structure of any one of claims 10-12, wherein the fissures extend from the wellbore for at least eight times a radius of the wellbore, and/or wherein the fissures extend from the wellbore for up to 100 m.

14. The thermal reach enhancement structure of any one of claims 10-13, wherein:
(i) the formation has a temperature of at least 300 °C.
(ii) the fissure is at a depth of at least 500 m.

15. The thermal reach enhancement structure of any one of claims 10-14, wherein the conduit comprises an insulated return conduit and wherein the conduit is thermally coupled to the high thermal-k material in the wellbore.

16. A method of increasing thermal conductivity using a thermal reach enhancement structure, comprising:
combining a plurality of first high thermal k particles with a plurality of second high thermal k particles;
compacting the plurality of first and second high thermal k particles such that
(a) the plurality of first high thermal k particles form a first mass that deforms elastically and plastically, and
(b) the plurality of second high thermal k particles form a second mass that deforms elastically;
wherein, upon compressional loading, the first mass is maintained in void spaces of a network of interlocked second high thermal k particles; and
wherein the first and second high thermal k particles are physically and/or chemically distinct.

17. The method of claim 16, wherein:
(i) the first high thermal k particles are shaped as flakes or platelets,
(ii) the first high thermal k particles are micro- or nanosized particles, and/or
(iii) the first high thermal k particles are carbonaceous material particles, optionally wherein the carbonaceous material is selected from the group consisting of a single and/or multi-walled carbon nanotube, graphene, a graphene oxide nanosheet, graphite powder, exfoliated graphite, flaked graphite, pyrolytic graphite, desulfurized petroleum coke, and fly ash, more optionally wherein the carbonaceous material is a surface modified micro- or nanostructured carbon allotrope or surface modified coal.

18. The method of either claim 16 or claim 17, wherein:
(i) the second high thermal k particles are shaped such that an aspect ratio of any two dimensions of a particle is equal or less than 10.
(ii) the second high thermal k particles are micro-and/or millimeter-sized particles.
(iii) the second high thermal k particles have a particle size distribution that spans no more than 1 log unit.
(iv) the second high thermal k particles have a hardness of at least 7 on the Mohs scale.
(v) the second high thermal k particles are metal particles or metal oxide particles, optionally wherein the metal in the metal particles is selected from the group consisting of tin, aluminum, copper, iron, silver, gold, an aluminum copper alloy, or a silver aluminum alloy, and/or wherein the metal oxide particles are selected from the group consisting of silica, alumina, copper oxide, zinc oxide, aluminum oxide, hematite, magnetite, and tin oxide.

19. The method of any one of claims 16-18, wherein the first high thermal k particles are barite, aluminum nitride, silicon nitride, and/or silicon carbide particles, and/or wherein the first high thermal k particles and the second high thermal k particles are present in the composition at a volume ratio of between 1:100 and 100:1.

20. A method of generating a thermal reach enhancement structure in a formation, comprising:
providing a slurry that comprises a fluid, a plurality of first high thermal k particles, and a plurality of second high thermal k particles, wherein the first and second high thermal k particles are physically and/or chemically distinct;
generating a plurality of fissures in the formation at an elevated pressure and allowing, at the elevated pressure, the slurry to migrate into the into the fissures; and
reducing the elevated pressure in an amount sufficient to effect compaction of the first high thermal k particles and to effect interlocking of the second high thermal k particles; and
wherein, after the step of reducing the elevated pressure, the compacted first high thermal k particles are located in a space that is formed and maintained by the interlocked second high thermal k particles.

21. The method of claim 20, wherein the slurry is prepared from a composition according to claim 1 or claim 18, and/or wherein the step of reducing the elevated pressure is performed over at least 1 hour.

22. The method of either claim 20 or claim 21:
(i) wherein the thermal reach enhancement structure has a thermal conductivity that is at least twice the thermal conductivity of a rock formation in which the thermal reach enhancement structure is located,
(ii) wherein the formation is a low permeability formation,
(iii) further comprising a step of thermally coupling a conduit to the fissures, optionally wherein the thermally coupling comprises placing a high thermal k grout or slurry in contact with the compacted and interlocked particles,
(iv) wherein the fluid comprises water, and/or
(v) wherein the fluid comprises air.

## Patentansprüche

1. Zusammensetzung zur Verbesserung der thermischen Reichweite, umfassend:
eine Mischung aus ersten Partikeln mit hohem thermischen k und zweiten Partikeln mit hohem thermischen k, wobei die ersten und die zweiten Partikel mit hohem thermischen k physikalisch und/oder chemisch unterschiedlich sind;
wobei die ersten Partikel mit hohem thermischen k aus einem ersten Material ausgebildet sind und eine derartige Form aufweisen, dass sich eine Masse der ersten Partikel mit hohem thermischen k bei Kompressionsbelastung elastisch und plastisch verformt; und
wobei die zweiten Partikel mit hohem thermischen k aus einem zweiten Material ausgebildet sind und eine derartige Form aufweisen, dass sich eine Masse der zweiten Partikel mit hohem thermischen k bei der Kompressionsbelastung nur elastisch verformt.

2. Zusammensetzung nach Anspruch 1, wobei:
(i) die ersten Partikel mit hohem thermischen k als Flocken oder Plättchen geformt sind,
(ii) die ersten Partikel mit hohem thermischen k Partikel in Mikro- oder Nanogröße sind und/oder
(iii) die ersten Partikel mit hohem thermischen k Partikel aus kohlenstoffhaltigem Material sind, wobei das kohlenstoffhaltige Material optional aus der Gruppe ausgewählt ist, die aus einem ein- und/oder mehrwandigen Kohlenstoffnanoröhrchen, Graphen, einem Graphenoxidnanoblatt, Graphitpulver, abgespaltenem Graphit, flockigem Graphit, pyrolytischem Graphit, entschwefeltem Petrolkoks und Flugasche besteht, wobei das kohlenstoffhaltige Material stärker optional ein oberflächenmodifiziertes mikro- oder nanostrukturiertes Kohlenstoffallotrop oder oberflächenmodifizierte Kohle ist.

3. Zusammensetzung entweder nach Anspruch 1 oder nach Anspruch 2, wobei:
(i) die zweiten Partikel mit hohem thermischen k derart geformt sind, dass ein Seitenverhältnis zweier beliebiger Dimensionen eines Partikels gleich oder kleiner als 10 ist,
(ii) die zweiten Partikel mit hohem thermischen k Partikel in Mikro- und/oder Millimetergröße sind,
(iii) die zweiten Partikel mit hohem thermischen k eine Partikelgrößenverteilung aufweisen, die höchstens 1 log-Einheit überspannt,
(iv) die zweiten Partikel mit hohem thermischen k eine Härte von mindestens 7 auf der Mohs-Skala aufweisen und/oder
(v) die zweiten Partikel mit hohem thermischen k Metallpartikel oder Metalloxidpartikel sind, wobei das Metall in den Metallpartikeln optional aus der Gruppe ausgewählt ist, die aus Zinn, Aluminium, Kupfer, Eisen, Silber, Gold, einer Aluminiumkupferlegierung oder einer Silberaluminiumlegierung besteht, wobei die Metalloxidpartikel stärker optional aus der Gruppe ausgewählt sind, die aus Siliziumdioxid, Aluminiumoxyd, Berylliumoxid, Kupferoxid, Zinkoxid, Aluminiumoxid, Hämatit, Magnetit und Zinnoxid besteht, wobei die zweiten Partikel mit hohem thermischen k stärker optional Baryt-, Borarsenit-, Aluminiumnitrid-, Siliziumnitrid- und/oder Siliziumkarbidpartikel sind.

4. Zusammensetzung nach einem vorhergehenden Anspruch, wobei die ersten Partikel mit hohem thermischen k und die zweiten Partikel mit hohem thermischen k in der Zusammensetzung in einem Volumenverhältnis zwischen 1:100 und 100:1 vorliegen.

5. Zusammensetzung nach einem vorhergehenden Anspruch, ferner umfassend Wasser in einer Menge, die ausreicht, um eine pumpbare Aufschlämmung herzustellen, optional ferner umfassend eines oder mehrere von einem Dispergiermittel, einem Weichmacher, einem Tensid, einem organischen Polymer, einem Siliziumdioxid-Füllstoff, NaCl oder KCl oder einem anderen anorganischen Salz, optional:
(i) wobei die Mischung der Partikel mit hohem thermischen k in der Aufschlämmung in einem Volumenverhältnis von 25 Vol.-% Feststoffe bis 80 Vol.-% Feststoffe vorliegt und/oder
(ii) wobei die ersten Partikel mit hohem thermischen k Partikel aus kohlenstoffhaltigem Material sind und wobei die zweiten Partikel mit hohem thermischen k Baryt-, Borarsenit-, Aluminiumnitrid-, Siliziumnitrid- und/oder Siliziumkarbidpartikel sind.

6. Zusammensetzung nach Anspruch 1:
wobei die ersten und die zweiten Partikel mit hohem thermischen k physikalisch unterschiedlich sind;
wobei die ersten Partikel mit hohem thermischen k eine Flockenform aufweisen; und
wobei die zweiten Partikel mit hohem thermischen k eine unregelmäßige Kornform aufweisen; und
wobei sich bei Kompressionsbelastung der Mischung durch geostatische Spannung eine Masse aus ersten Partikeln mit hohem thermischen k elastisch und plastisch verformt und sich an die Geometrie eines Risses anpasst, um ein thermisch leitendes Netzwerk auszubilden, das dann durch ein Netzwerk aus zweiten Partikeln mit hohem thermischen k an Ort und Stelle gehalten wird, das sich elastisch verformt und bei weiterer Verdichtung verblockt.

7. Zusammensetzung nach Anspruch 6, wobei:
(i) die ersten Partikel mit hohem thermischen k Partikel in Mikro- oder Nanogröße sind und/oder
(ii) die ersten Partikel mit hohem thermischen k Partikel aus kohlenstoffhaltigem Material sind, wobei das kohlenstoffhaltige Material optional ein ein- und/oder mehrwandiges Kohlenstoffnanoröhrchen, Graphen, ein Graphenoxidnanoblatt, Graphitpulver, abgespaltener Graphit, flockiger Graphit, pyrolytischer Graphit, entschwefelter Petrolkoks, Flugasche ist, wobei das kohlenstoffhaltige Material stärker optional ein oberflächenmodifiziertes mikro- oder nanostrukturiertes Kohlenstoffallotrop oder oberflächenmodifizierte Kohle ist.

8. Zusammensetzung entweder nach Anspruch 6 oder nach Anspruch 7, wobei:
(i) die zweiten Partikel mit hohem thermischen k Partikel in Mikro- und/oder Millimetergröße sind,
(ii) die zweiten Partikel mit hohem thermischen k eine Partikelgrößenverteilung aufweisen, die höchstens 1 log-Einheit überspannt,
(iii) die zweiten Partikel mit hohem thermischen k eine Härte von mindestens 7 auf der Mohs-Skala aufweisen,
(iv) die zweiten Partikel mit hohem thermischen k Metallpartikel oder Metalloxidpartikel sind, wobei das Metall in den Metallpartikeln optional aus der Gruppe ausgewählt ist, die aus Zinn, Aluminium, Kupfer, Eisen, Silber, Gold, einer Aluminiumkupferlegierung oder einer Silberaluminiumlegierung besteht, wobei die Metalloxidpartikel stärker optional aus der Gruppe ausgewählt sind, die aus Siliziumdioxid, Aluminiumoxyd, Kupferoxid, Zinkoxid, Aluminiumoxid, Hämatit, Magnetit und Zinnoxid besteht, wobei die zweiten Partikel mit hohem thermischen k stärker optional Baryt-, Aluminiumnitrid-, Siliziumnitrid- und/oder Siliziumkarbidpartikel sind.

9. Zusammensetzung nach einem vorhergehenden Anspruch:
(i) wobei die ersten Partikel mit hohem thermischen k und die zweiten Partikel mit hohem thermischen k in der Zusammensetzung in einem Volumenverhältnis zwischen 1:100 und 100:1 vorliegen und/oder
(ii) ferner umfassend Wasser in einer Menge, die ausreicht, um eine pumpbare Aufschlämmung herzustellen, optional:
(a) ferner umfassend mindestens eines von einem Dispergiermittel, einem Weichmacher, einem Tensid, einem organischen Polymer, einem Siliziumdioxid-Füllstoff, einem NaCl oder KCl oder einem anderen anorganischen Salz,
(b) wobei die Mischung von Partikeln mit hohem thermischen k in der Aufschlämmung in einem Volumenverhältnis von 25 Vol.-% Feststoffe bis 80 Vol.-% Feststoffe vorliegt und/oder
(c) wobei die ersten Partikel mit hohem thermischen k Partikel aus kohlenstoffhaltigem Material sind und wobei die zweiten Partikel mit hohem thermischen k Baryt-, Borarsenit-, Aluminiumnitrid-, Siliziumnitrid- und/oder Siliziumkarbidpartikel sind.

10. Struktur zur Verbesserung der thermischen Reichweite, umfassend:
ein Netzwerk aus verdichteten ersten Partikeln mit hohem thermischen k innerhalb eines Netzwerks aus verdichteten und verblockten zweiten Partikeln mit hohem thermischen k;
wobei die ersten und die zweiten Partikel mit hohem thermischen k physikalisch und/oder chemisch unterschiedlich sind;
wobei die ersten Partikel mit hohem thermischen k aus einem ersten Material ausgebildet sind und eine derartige Form aufweisen, dass sich eine Masse der ersten Partikel mit hohem thermischen k bei Kompressionsbelastung elastisch und plastisch verformt; und
wobei die zweiten Partikel mit hohem thermischen k aus einem zweiten Material ausgebildet sind und eine derartige Form aufweisen, dass sich eine Masse der zweiten Partikel mit hohem thermischen k bei der Kompressionsbelastung nur elastisch verformt; und
wobei die Netzwerke aus ersten und aus zweiten Partikeln mit hohem thermischen k in einem Riss innerhalb einer Formation angeordnet und thermisch mit einem Material mit hohem thermischen k und/oder einer Leitung für ein Arbeitsfluid in einem Bohrloch gekoppelt sind.

11. Struktur zur Verbesserung der thermischen Reichweite nach Anspruch 10, wobei das Netzwerk aus verdichteten ersten Partikeln mit hohem thermischen k und das Netzwerk aus verdichteten und verblockten zweiten Partikeln mit hohem thermischen k aus der Zusammensetzung nach einem der Ansprüche 1-5 oder der Ansprüche 6-9 ausgebildet sind.

12. Struktur zur Verbesserung der thermischen Reichweite entweder nach Anspruch 10 oder nach Anspruch 11, wobei:
(i) die Netzwerke aus ersten und aus zweiten Partikeln mit hohem thermischen k eine Wärmeleitfähigkeit aufweisen, die mindestens das Doppelte der Wärmeleitfähigkeit einer Gesteinsformation beträgt, in der sich die Struktur zur Verbesserung der thermischen Reichweite befindet, wobei die Netzwerke aus ersten und aus zweiten Partikeln mit hohem thermischen k optional eine Wärmeleitfähigkeit von mindestens 50 W/m°K aufweisen, und/oder
(iii) das Material mit hohem thermischen k in dem Bohrloch eine zementartige Zusammensetzung ist, die ein Material mit hohem thermischen k oder eine verdichtete Aufschlämmung aus Material mit hohem thermischen k umfasst.

13. Struktur zur Verbesserung der thermischen Reichweite nach einem der Ansprüche 10-12, wobei sich die Risse über mindestens das Achtfache eines Radius des Bohrlochs von dem Bohrloch erstrecken und/oder wobei sich die Risse über bis zu 100 m von dem Bohrloch erstrecken.

14. Struktur zur Verbesserung der thermischen Reichweite nach einem der Ansprüche 10-13, wobei:
(i) die Formation eine Temperatur von mindestens 300 °C aufweist,
(ii) der Riss in einer Tiefe von mindestens 500 m liegt.

15. Struktur zur Verbesserung der thermischen Reichweite nach einem der Ansprüche 10-14, wobei die Leitung eine isolierte Rücklaufleitung umfasst und wobei die Leitung thermisch an das Material mit hohem thermischen k in dem Bohrloch gekoppelt ist.

16. Verfahren zum Erhöhen der Wärmeleitfähigkeit unter Verwendung einer Struktur zur Verbesserung der thermischen Reichweite, umfassend:
Kombinieren einer Vielzahl von ersten Partikeln mit hohem thermischen k mit einer Vielzahl von zweiten Partikeln mit hohem thermischen k;
Verdichten der Vielzahl von ersten und von zweiten Partikeln mit hohem thermischen k, sodass
(a) die Vielzahl von ersten Partikeln mit hohem thermischen k eine erste Masse ausbildet, die sich elastisch und plastisch verformt, und
(b) die Vielzahl von zweiten Partikeln mit hohem thermischen k eine zweite Masse ausbildet, die sich elastisch verformt;
wobei bei Kompressionsbelastung die erste Masse in Leerräumen eines Netzwerks von verblockten zweiten Partikeln mit hohem thermischen k gehalten wird; und
wobei die ersten und die zweiten Partikel mit hohem thermischen k physikalisch und/oder chemisch unterschiedlich sind.

17. Verfahren nach Anspruch 16, wobei:
(i) die ersten Partikel mit hohem thermischen k als Flocken oder Plättchen geformt sind,
(ii) die ersten Partikel mit hohem thermischen k Partikel in Mikro- oder Nanogröße sind und/oder
(iii) die ersten Partikel mit hohem thermischen k Partikel aus kohlenstoffhaltigem Material sind, wobei das kohlenstoffhaltige Material optional aus der Gruppe ausgewählt ist, die aus einem ein- und/oder mehrwandigen Kohlenstoffnanoröhrchen, Graphen, einem Graphenoxidnanoblatt, Graphitpulver, abgespaltenem Graphit, flockigem Graphit, pyrolytischem Graphit, entschwefeltem Petrolkoks und Flugasche besteht, wobei das kohlenstoffhaltige Material stärker optional ein oberflächenmodifiziertes mikro- oder nanostrukturiertes Kohlenstoffallotrop oder oberflächenmodifizierte Kohle ist.

18. Verfahren entweder nach Anspruch 16 oder nach Anspruch 17, wobei:
(i) die zweiten Partikel mit hohem thermischen k derart geformt sind, dass ein Seitenverhältnis zweier beliebiger Dimensionen eines Partikels gleich oder kleiner als 10 ist,
(ii) die zweiten Partikel mit hohem thermischen k Partikel in Mikro- und/oder Millimetergröße sind,
(iii) die zweiten Partikel mit hohem thermischen k eine Partikelgrößenverteilung aufweisen, die nicht mehr als 1 log-Einheit überspannt,
(iv) die zweiten Partikel mit hohem thermischen k eine Härte von mindestens 7 auf der Mohs-Skala aufweisen,
(v) die zweiten Partikel mit hohem thermischen k Metallpartikel oder Metalloxidpartikel sind, wobei das Metall in den Metallpartikeln optional aus der Gruppe ausgewählt ist, die aus Zinn, Aluminium, Kupfer, Eisen, Silber, Gold, einer Aluminiumkupferlegierung oder einer Silberaluminiumlegierung besteht, und/oder wobei die Metalloxidpartikel aus der Gruppe ausgewählt sind, die aus Siliziumdioxid, Aluminiumoxyd, Kupferoxid, Zinkoxid, Aluminiumoxid, Hämatit, Magnetit und Zinnoxid besteht.

19. Verfahren nach einem der Ansprüche 16-18, wobei die ersten Partikel mit hohem thermischen k Baryt-, Aluminiumnitrid-, Siliziumnitrid- und/oder Siliziumkarbidpartikel sind, und/oder wobei die ersten Partikel mit hohem thermischen k und die zweiten Partikel mit hohem thermischen k in der Zusammensetzung in einem Volumenverhältnis zwischen 1:100 und 100:1 vorliegen.

20. Verfahren zum Erzeugen einer Struktur zur Verbesserung der thermischen Reichweite in einer Formation, umfassend:
Bereitstellen einer Aufschlämmung, die ein Fluid, eine Vielzahl von ersten Partikeln mit hohem thermischen k und eine Vielzahl von zweiten Partikeln mit hohem thermischen k umfasst, wobei die ersten und die zweiten Partikel mit hohem thermischen k physikalisch und/oder chemisch unterschiedlich sind;
Erzeugen einer Vielzahl von Rissen in der Formation bei einem erhöhten Druck und Ermöglichen, dass die Aufschlämmung bei dem erhöhten Druck in die Risse migriert; und
Reduzieren des erhöhten Drucks in einem Maß, das ausreicht, um eine Verdichtung der ersten Partikel mit hohem thermischen k zu bewirken und ein Verblocken der zweiten Partikel mit hohem thermischen k zu bewirken; und
wobei sich die verdichteten ersten Partikel mit hohem thermischen k nach dem Schritt des Reduzierens des erhöhten Drucks in einem Raum befinden, der durch die verblockten zweiten Partikel mit hohem thermischen k ausgebildet und aufrechterhalten wird.

21. Verfahren nach Anspruch 20, wobei die Aufschlämmung aus einer Zusammensetzung nach Anspruch 1 oder Anspruch 18 hergestellt wird und/oder wobei der Schritt des Reduzierens des erhöhten Drucks über mindestens 1 Stunde durchgeführt wird.

22. Verfahren entweder nach Anspruch 20 oder nach Anspruch 21:
(i) wobei die Struktur zur Verbesserung der thermischen Reichweite eine Wärmeleitfähigkeit aufweist, die mindestens das Doppelte der Wärmeleitfähigkeit einer Gesteinsformation beträgt, in der sich die Struktur zur Verbesserung der thermischen Reichweite befindet,
(ii) wobei die Formation eine Formation mit geringer Permeabilität ist,
(iii) ferner umfassend einen Schritt des thermischen Koppelns einer Leitung an die Risse, wobei das thermische Koppeln optional Platzieren eines Mörtels oder einer Aufschlämmung mit hohem thermischen k in Kontakt mit den verdichteten und verblockten Partikeln umfasst,
(iv) wobei das Fluid Wasser umfasst und/oder
(v) wobei das Fluid Luft umfasst.

## Revendications

1. Composition d'amélioration de portée thermique, comprenant :
un mélange de premières particules à k thermique élevé et de secondes particules à k thermique élevé, dans laquelle les premières et secondes particules à k thermique élevé sont physiquement et/ou chimiquement distinctes ;
dans laquelle les premières particules à k thermique élevé sont formées d'un premier matériau et ont une forme telle qu'une masse des premières particules à k thermique élevé, lors d'une sollicitation en compression, se déforme élastiquement et plastiquement ; et
dans laquelle les secondes particules à k thermique élevé sont formées d'un second matériau et ont une forme telle qu'une masse des secondes particules à k thermique élevé, lors de la sollicitation en compression, se déforme uniquement élastiquement.

2. Composition de la revendication 1, dans laquelle :
(i) les premières particules à k thermique élevé se présentent sous forme de paillettes ou de plaquettes,
(ii) les premières particules à k thermique élevé sont des particules de taille micrométrique ou nanométrique, et/ou
(iii) les premières particules à k thermique élevé sont des particules de matériau carboné, dans laquelle, éventuellement, le matériau carboné est choisi dans le groupe constitué de nanotube de carbone à paroi simple et/ou à parois multiples, de graphène, de nanofeuille d'oxyde de graphène, de poudre de graphite, de graphite exfolié, de graphite en paillettes, de graphite pyrolytique, de coke de pétrole désulfuré et de cendres volantes, plus éventuellement dans laquelle le matériau carboné est un allotrope de carbone microstructuré ou nanostructuré modifié en surface ou un charbon modifié en surface.

3. Composition l'une de la revendication 1 ou la revendication 2, dans laquelle :
(i) les secondes particules à k thermique élevé ont une forme telle qu'un rapport d'aspect de deux dimensions quelconques d'une particule est inférieur ou égal à 10,
(ii) les secondes particules à k thermique élevé sont des particules de taille micrométrique et/ou millimétrique,
(iii) les secondes particules à k thermique élevé ont une distribution granulométrique qui s'étend sur au plus 1 unité logarithmique,
(iv) les secondes particules à k thermique élevé ont une dureté d'au moins 7 sur l'échelle de Mohs, et/ou
(v) les secondes particules à k thermique élevé sont des particules métalliques ou des particules d'oxyde métallique, dans laquelle, éventuellement, le métal des particules métalliques est choisi dans le groupe constitué de l'étain, de l'aluminium, du cuivre, du fer, de l'argent, de l'or, d'un alliage aluminium-cuivre ou d'un alliage argent-aluminium, dans laquelle, éventuellement encore, les particules d'oxyde métallique sont choisies dans le groupe constitué de la silice, de l'alumine, de l'oxyde de béryllium, d'oxyde de cuivre, d'oxyde de zinc, d'oxyde d'aluminium, d'hématite, de magnétite et d'oxyde d'étain, dans laquelle, éventuellement encore, les secondes particules à k thermique élevé sont des particules de barytine, d'arsénite de bore, de nitrure d'aluminium, de nitrure de silicium et/ou de carbure de silicium.

4. Composition d'une quelconque revendication précédente, dans laquelle les premières particules à k thermique élevé et les secondes particules à k thermique élevé sont présentes dans la composition selon un rapport volumique compris entre 1:100 et 100:1.

5. Composition d'une quelconque revendication précédente, comprenant en outre de l'eau en une quantité suffisante pour produire une suspension pompable, comprenant en outre éventuellement comprenant en outre l'un ou plusieurs d'un dispersant, d'un plastifiant, d'un tensioactif, d'un polymère organique, d'une charge de silice, de NaCl ou de KCl ou d'un autre sel inorganique, éventuellement :
(i) dans laquelle le mélange des particules à k thermique élevé est présent dans la suspension selon un rapport volumique allant de 25 % en volume de solides à 80 % en volume de solides, et/ou
(ii) dans laquelle les premières particules à k thermique élevé sont des particules de matériau carboné, et dans laquelle les secondes particules à k thermique élevé sont des particules de barytine, d'arsénite de bore, de nitrure d'aluminium, de nitrure de silicium et/ou de carbure de silicium.

6. Composition de la revendication 1 :
dans laquelle les premières et secondes particules à k thermique élevé sont physiquement distinctes ;
dans laquelle les premières particules à k thermique élevé ont une forme de paillettes ; et
dans laquelle les secondes particules à k thermique élevé ont une forme de grain irrégulière ; et
dans laquelle, lors d'une sollicitation en compression du mélange par une contrainte géostatique, une masse de premières particules à k thermique élevé se déforme élastiquement et plastiquement et se conforme à la géométrie d'une fissure pour former un réseau thermiquement conducteur qui est ensuite maintenu en place par un réseau de secondes particules à k thermique élevé qui se déforme élastiquement et s'imbrique lors d'un compactage ultérieur.

7. Composition de la revendication 6, dans laquelle :
(i) les premières particules à k thermique élevé sont des particules de taille micrométrique ou nanométrique, et/ou
(ii) les premières particules à k thermique élevé sont des particules de matériau carboné, dans laquelle, éventuellement, le matériau carboné est un nanotube de carbone à paroi simple et/ou à parois multiples, du graphène, une nanofeuille d'oxyde de graphène, une poudre de graphite, du graphite exfolié, du graphite en paillettes, du graphite pyrolytique, du coke de pétrole désulfuré, des cendres volantes, dans laquelle, éventuellement encore, le matériau carboné est un allotrope de carbone microstructuré ou nanostructuré modifié en surface ou un charbon modifié en surface.

8. Composition de l'une de la revendication 6 ou la revendication 7, dans laquelle :
(i) les secondes particules à k thermique élevé sont des particules de taille micrométrique et/ou millimétrique,
(ii) les secondes particules à k thermique élevé ont une distribution granulométrique qui s'étend sur au plus 1 unité logarithmique,
(iii) les secondes particules à k thermique élevé ont une dureté d'au moins 7 sur l'échelle de Mohs,
(iv) les secondes particules à k thermique élevé sont des particules métalliques ou des particules d'oxyde métallique, dans laquelle, éventuellement, le métal dans les particules métalliques est choisi dans le groupe constitué de l'étain, de l'aluminium, du cuivre, du fer, de l'argent, de l'or, d'un alliage aluminium-cuivre ou d'un alliage argent-aluminium, dans laquelle, éventuellement encore, les particules d'oxyde métallique sont choisies dans le groupe constitué de la silice, de l'alumine, d'oxyde de cuivre, d'oxyde de zinc, d'oxyde d'aluminium, d'hématite, de magnétite et d'oxyde d'étain, dans laquelle, éventuellement encore, les secondes particules à k thermique élevé sont des particules de barytine, de nitrure d'aluminium, de nitrure de silicium et/ou de carbure de silicium.

9. Composition d'une quelconque revendication précédente :
(i) dans laquelle les premières particules à k thermique élevé et les secondes particules à k thermique élevé sont présentes dans la composition selon un rapport volumique compris entre 1:100 et 100:1, et/ou
(ii) comprenant en outre de l'eau en une quantité suffisante pour produire une suspension pompable, éventuellement :
(a) comprenant en outre au moins l'un d'un dispersant, d'un plastifiant, d'un tensioactif, d'un polymère organique, d'une charge de silice, de NaCl ou de KCl ou d'un autre sel inorganique,
(b) dans laquelle le mélange de particules à k thermique élevé est présent dans la suspension selon un rapport volumique allant de 25 % en volume de solides à 80 % en volume de solides, et/ou
(c) dans laquelle les premières particules à k thermique élevé sont des particules de matériau carboné, et dans laquelle les secondes particules à k thermique élevé sont des particules de barytine, d'arsénite de bore, de nitrure d'aluminium, de nitrure de silicium et/ou de carbure de silicium.

10. Structure d'amélioration de portée thermique, comprenant :
un réseau de premières particules à k thermique élevé compactées dans un réseau de secondes particules à k thermique élevé compactées et imbriquées ;
dans laquelle les premières et secondes particules à k thermique élevé sont physiquement et/ou chimiquement distinctes ;
dans laquelle les premières particules à k thermique élevé sont formées d'un premier matériau et ont une forme telle qu'une masse des premières particules à k thermique élevé, lors d'une sollicitation en compression, se déforme élastiquement et plastiquement ; et
dans laquelle les secondes particules à k thermique élevé sont formées d'un second matériau et ont une forme telle qu'une masse des secondes particules à k thermique élevé, lors de la sollicitation en compression, se déforme uniquement élastiquement ; et
dans laquelle les réseaux de premières et secondes particules à k thermique élevé sont disposés dans une fissure dans une formation et couplés thermiquement à un matériau à k thermique élevé et/ou à un conduit destiné à un fluide de travail dans un puits de forage.

11. Structure d'amélioration de portée thermique de la revendication 10, dans laquelle le réseau de premières particules à k thermique élevé compactées et le réseau de secondes particules à k thermique élevé compactées et imbriquées sont formés à partir de la composition de l'une quelconque des revendications 1 à 5 ou des revendications 6 à 9.

12. Structure d'amélioration de portée thermique de l'une de la revendication 10 ou la revendication 11, dans laquelle :
(i) les réseaux de premières et secondes particules à k thermique élevé ont une conductivité thermique qui est au moins deux fois la conductivité thermique d'une formation rocheuse dans laquelle la structure d'amélioration de portée thermique est située, dans laquelle, éventuellement, les réseaux de premières et secondes particules à k thermique élevé ont une conductivité thermique d'au moins 50 W/m°K, et/ou
(iii) le matériau à k thermique élevé dans le puits de forage est une composition cimentaire comprenant un matériau à k thermique élevé ou une suspension compactée à partir d'un matériau à k thermique élevé.

13. Structure d'amélioration de portée thermique de l'une quelconque des revendications 10 à 12, dans laquelle les fissures s'étendent à partir du puits de forage sur au moins huit fois un rayon du puits de forage, et/ou dans laquelle les fissures s'étendent à partir du puits de forage jusqu'à 100 m.

14. Structure d'amélioration de portée thermique de l'une quelconque des revendications 10 à 13, dans laquelle :
(i) la formation a une température d'au moins 300 °C,
(ii) la fissure se trouve à une profondeur d'au moins 500 m.

15. Structure d'amélioration de portée thermique de l'une quelconque des revendications 10 à 14, dans laquelle le conduit comprend un conduit de retour isolé et dans laquelle le conduit est couplé thermiquement au matériau à k thermique élevé dans le puits de forage.

16. Procédé d'augmentation de conductivité thermique utilisant une structure d'amélioration de portée thermique, comprenant :
la combinaison d'une pluralité de premières particules à k thermique élevé avec une pluralité de secondes particules à k thermique élevé ;
le compactage de la pluralité de premières et secondes particules à k thermique élevé de sorte que
(a) la pluralité de premières particules à k thermique élevé forme une première masse qui se déforme élastiquement et plastiquement, et
(b) la pluralité de secondes particules à k thermique élevé forme une seconde masse qui se déforme élastiquement ;
dans lequel, lors d'une sollicitation en compression, la première masse est maintenue dans des espaces vides d'un réseau de secondes particules à k thermique élevé imbriquées ; et
dans lequel les premières et secondes particules à k thermique élevé sont physiquement et/ou chimiquement distinctes.

17. Procédé de la revendication 16, dans lequel :
(i) les premières particules à k thermique élevé se présentent sous forme de paillettes ou de plaquettes,
(ii) les premières particules à k thermique élevé sont des particules de taille micrométrique ou nanométrique, et/ou
(iii) les premières particules à k thermique élevé sont des particules de matériau carboné, dans lequel, éventuellement, le matériau carboné est choisi dans le groupe constitué d'un nanotube de carbone à paroi simple et/ou à parois multiples, de graphène, d'une nanofeuille d'oxyde de graphène, d'une poudre de graphite, de graphite exfolié, de graphite en paillettes, de graphite pyrolytique, de coke de pétrole désulfuré et de cendres volantes, dans lequel, éventuellement encore, le matériau carboné est un allotrope de carbone microstructuré ou nanostructuré modifié en surface ou un charbon modifié en surface.

18. Procédé l'une de la revendication 16 ou la revendication 17, dans lequel :
(i) les secondes particules à k thermique élevé ont une forme telle qu'un rapport d'aspect de deux dimensions quelconques d'une particule est inférieur ou égal à 10,
(ii) les secondes particules à k thermique élevé sont des particules de taille micrométrique et/ou millimétrique,
(iii) les secondes particules à k thermique élevé ont une distribution granulométrique qui s'étend sur au plus 1 unité logarithmique,
(iv) les secondes particules à k thermique élevé ont une dureté d'au moins 7 sur l'échelle de Mohs,
(v) les secondes particules à k thermique élevé sont des particules métalliques ou des particules d'oxyde métallique, dans lequel, éventuellement, le métal dans les particules métalliques est choisi dans le groupe constitué de l'étain, de l'aluminium, du cuivre, du fer, de l'argent, de l'or, d'un alliage aluminium-cuivre ou d'un alliage argent-aluminium, et/ou dans lequel les particules d'oxyde métallique sont choisies dans le groupe constitué de la silice, de l'alumine, d'oxyde de cuivre, d'oxyde de zinc, d'oxyde d'aluminium, d'hématite, de magnétite et d'oxyde d'étain.

19. Procédé de l'une quelconque des revendications 16 à 18, dans lequel les premières particules à k thermique élevé sont des particules de barytine, de nitrure d'aluminium, de nitrure de silicium et/ou de carbure de silicium, et/ou dans lequel les premières particules à k thermique élevé et les secondes particules à k thermique élevé sont présentes dans la composition selon un rapport volumique compris entre 1:100 et 100:1.

20. Procédé de génération d'une structure d'amélioration de portée thermique dans une formation, comprenant :
la fourniture d'une suspension qui comprend un fluide, une pluralité de premières particules à k thermique élevé et une pluralité de secondes particules à k thermique élevé, dans lequel les premières et secondes particules à k thermique élevé sont physiquement et/ou chimiquement distinctes ;
la génération d'une pluralité de fissures dans la formation à une pression élevée et, à la pression élevée, la permission à la suspension de migrer dans les fissures ; et
la réduction de la pression élevée d'une quantité suffisante pour effectuer le compactage des premières particules à k thermique élevé et effectuer l'imbrication des secondes particules à k thermique élevé ; et
dans lequel, après l'étape de réduction de la pression élevée, les premières particules à k thermique élevé compactées sont situées dans un espace qui est formé et maintenu par les secondes particules à k thermique élevé imbriquées.

21. Procédé de la revendication 20, dans lequel la suspension est préparée à partir d'une composition selon la revendication 1 ou la revendication 18, et/ou dans lequel l'étape de réduction de la pression élevée est effectuée pendant au moins 1 heure.

22. Procédé de l'une de la revendication 20 ou la revendication 21 :
(i) dans lequel la structure d'amélioration de portée thermique a une conductivité thermique qui est au moins deux fois la conductivité thermique d'une formation rocheuse dans laquelle la structure d'amélioration de portée thermique est située,
(ii) dans lequel la formation est une formation à faible perméabilité,
(iii) comprenant en outre une étape de couplage thermique d'un conduit aux fissures, dans lequel, éventuellement, le couplage thermique comprend la mise en contact d'un coulis ou d'une suspension à k thermique élevé avec les particules compactées et imbriquées,
(iv) dans lequel le fluide comprend de l'eau, et/ou
(v) dans lequel le fluide comprend de l'air.
